Europäisches Patentamt

(19) European Patent Office

Office européen des brevets

(11) **EP 1 458 598 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **02795022.9**

(22) Anmeldetag: **18.12.2002**

(51) Int Cl.:
**B60S 1/08** (2006.01)

(86) Internationale Anmeldenummer:
**PCT/DE2002/004651**

(87) Internationale Veröffentlichungsnummer:
**WO 2003/051692 (26.06.2003 Gazette 2003/26)**

(54) **SCHEIBENWISCHANLAGE MIT ZWEI GEGENLÄUFIGEN WISCHERN**

WINDSCREEN WIPER SYSTEM COMPRISING TWO OPPOSED WIPERS

DISPOSITIF D'ESSUIE-GLACE DEUX BRAS MOUVEMENT ANTAGONISTE

(84) Benannte Vertragsstaaten:
**DE ES FR GB IT**

(30) Priorität: **19.12.2001 DE 10162679**
**30.09.2002 DE 10245966**

(43) Veröffentlichungstag der Anmeldung:
**22.09.2004 Patentblatt 2004/39**

(73) Patentinhaber: **ROBERT BOSCH GMBH**
**70442 Stuttgart (DE)**

(72) Erfinder: **KOHLRAUSCH, Philipp**
**70180 Stuttgart (DE)**

(56) Entgegenhaltungen:
**EP-A- 0 953 488        WO-A-98/29285**
**DE-A- 3 208 121        FR-A- 2 785 246**

**Beschreibung**

Die Erfindung betrifft eine Scheibenwischanlage mit zwei gegenläufigen Wischern. Bei gegenläufigen Wischern bewegen sich die Wischer der Scheibenwischanlage in entgegengesetzter Richtung. Dabei werden die Wischer von einem Antrieb betrieben, wobei die beiden Wischer über eine Mechanik so miteinander gekoppelt sind, dass die Wischer beim Betrieb nicht kollidieren.

Bisher werden die Winkelvorgaben der gegenläufigen Wischer manuell eingestellt. Dies wird anhand einzelner manuell bestimmter Winkelpositionen der Wischer durchgeführt, bei denen sich die Wischer nicht berühren. Anschließend werden diese Winkelpositionen durch Steuerkurven aus kubischen Kurvenstücken miteinander verbunden. Dies hat den Nachteil, dass ein Kollisionsschutz nicht zwingend gegeben ist und es vielmehr von der Erfahrung des Entwicklers abhängt, ob die Wischer kollidieren oder nicht. Darüber hinaus eignen sich die Kurvenverläufe nicht für eine Regelung, da die Kurven nur einmal nach der Zeit differenzierbar sind, wodurch die Sollverläufe Unstetigkeiten beim Verlauf der Beschleunigungen erzeugen. Dies führt zu einem Rattern der Wischer.

Aus der WO-A-98/29285 ist eine Scheibenwischanlage mit zwei gegenläufigen Wischern bekannt, die über jeweils einen separaten Motor antreibbar sind. Hierbei ist eine Regelungseinheit vorgesehen, die die Motoren der Wischer über Steuersignale getrennt voneinander ansteuert.

Weiterhin ist aus der DE-A-3208121 eine Scheibenwischvorrichtung bekannt, bei der ein Funktionsgenerator eine Sinusspannung als Führungsgröße ausgibt, die zur synchronen Regelung von zwei separaten Motoren, die gegenläufige Wischer ansteuern, verwendet wird.

Es ist daher Aufgabe der vorliegenden Erfindung die Ansteuerung von gegenläufigen Wischern so zu gestalten, dass die Wischer beim Betrieb nicht rattern und nicht kollidieren.

Diese Aufgabe wird durch die Scheibenwischanlage nach Anspruch 1 gelöst.

Weitere Ausgestaltungen der Erfindung sind in den abhängigen Ansprüchen angegeben.

Erfindungsgemäß ist eine Scheibenwischanlage mit zwei gegenläufigen Wischern vorgesehen, die über jeweils einen separaten Motor antreibbar sind. Ferner ist eine Regelungseinheit vorgesehen, um die Motoren über Steuersignale getrennt voneinander anzusteuern. Durch die Regelungseinheit werden die Motoren der Wischer angesteuert, um eine von der Zeit abhängige Winkelstellung der Wischer gemäß einer trigonometrischen Funktion $\varphi(t)$ vorzugeben.

Die Erfindung besteht darin, eine Regelungseinheit für eine Scheibenwischanlage mit zwei gegenläufigen Wischern zu schaffen. Die Regelungseinheit soll die Nachteile des Standes der Technik insbesondere ein Rattern der Wischer und eine eventuelle Kollision der Wischer vermeiden. Insbesondere besteht eine hohe Tendenz der Wischer in der Nähe der Umkehrlagen zu rattern. Diesbezüglich wird erfindungsgemäß vorgesehen, die Regelungseinheit so zu gestalten, dass der Wischwinkel eine im wesentlichen trigonometrische Funktion ist. Die trigonometrische Funktion hat den Vorteil, dass sie beliebig oft nach der Zeit differenzierbar ist, so dass keine Unstetigkeiten beim Verlauf der Beschleunigungen des Wischers entstehen, so dass zum Einen ein Rattern vermieden werden kann, und zum anderen die benötigte elektrische Energie für die Bewegung der Wischer minimiert ist.

Ferner eignen sich trigonometrische Funktionen zur Regelung der Wischer, da vergleichsweise einfach Bedingungen zur Vermeidung von Kollisionen der gegenläufigen Wischer definiert werden können.

Das grundlegende Element der der Regelung zugrunde liegenden Wischverläufe sind trigonometrische Funktionen, wie z.B. Sinus- und Cosinusfunktionen. Diese sind unendlich glatt und beliebig oft nach der Zeit differenzierbar. D.h. es werden keine ruckartigen Anregungen, wie z.B. über Beschleunigungsänderungen in das System eingebracht. Des weiteren bieten die trigonometrischen Funktionen die Möglichkeit, eine Vorsteuerung basierend auf einem dynamischen physikalischen Modell direkt aus den trigonometrischen Funktionen zu berechnen. Eine solche Vorsteuerung kann eine Regelung deutlich verbessern.

Die Verwendung von trigonometrischen Funktionen zur Regelung der Wischer hat darüber hinaus den Vorteil, dass die Wischverläufe über wenige Parameter eindeutig bestimmt werden können. Dies erlaubt eine einfache und effiziente Verwendung der Regelung.

Gemäß Anspruch 1 entsprechen die trigonometrischen Funktionen

$$\overline{\varphi}_{BS}(t) = -\frac{\varphi_{max}}{2}\left(\sin(\omega t + \gamma) + \frac{1}{k}\cos(2(\omega t + \gamma) + 1) - \frac{1}{q}\sin 3(\omega t + \gamma) - 1\right)\frac{q}{1+q}$$

$$(1a)$$

$$\overline{\varphi}_{FS}\left(t\right)=-\frac{\varphi_{max}}{2}\left(\sin\left(\omega t-\gamma\right)+\frac{1}{k}\cos(2(\omega t-\gamma)+1)-\frac{1}{q}\sin 3(\omega t-\gamma)+1\right)\frac{q}{1+q}$$

(1b)

wobei $\varphi_{BS}$ den Momentanwinkel auf der Beifahrerseite und $\varphi_{FS}$ der Momentanwinkel auf der Fahrerseite entspricht. $\varphi_{max}$ gibt den Wischbereich an und $\omega$ die Winkelgeschwindigkeit, die von einer Periodendauer der Wischer abhängt. $\gamma$ gibt den Phasenwinkel der Wischbewegung an. k und q sind Parameter, die so ausgewählt sind, dass Kollisionen der beiden Wischer vermieden werden. Mit Hilfe der so ausgewählten trigonometrischen Funktionen ist es möglich eine Scheibenwischanlage mit gegenläufigen Wischern zu schaffen, wobei die Wischer nicht rattern, weil sprunghafte Änderungen der Beschleunigung der Wischer vermieden werden. Darüber hinaus kann vergleichsweise einfach durch Bestimmung der Parameter k und q die Wischer so zueinander phasenverschoben betrieben werden, dass Kollisionen vermieden werden.

Vorzugsweise sind die Parameter k und q so gewählt, dass die Wischgeschwindigkeit eines der Wischer in mindestens einer Umkehrlage einen Minimalwert übersteigt, so dass ein Rattern der Wischer auf der Scheibe vermieden wird. Da insbesondere ein Rattern von Wischern auftreten kann, wenn die Wischgeschwindigkeit zu gering ist, wird durch eine besondere Auswahl der Parameter k und q dafür gesorgt, dass die Geschwindigkeiten der Wischer nahe der Umkehrlagen den betreffenden Minimalwert übersteigt.

Darüber hinaus ist es vorteilhaft, dass k und q so ausgewählt sind, dass sich die Winkelverläufe der Wischer ohne eine Richtungsänderung der Wischerbewegung zwischen der oberen und unteren Umkehrlage bewegen.

Eine bevorzugte Ausführungsform der Erfindung wird im folgenden anhand der beigefügten Zeichnungen näher erläutert. Es zeigen:

Fig. 1 ein schematischer Aufbau der Scheibenwischanlage gemäß der Erfindung;

Fig. 2 verschiedene Zeitverläufe für $\varphi_{FS}$ und $\varphi_{BS}$ in Abhängigkeit von k und q;

Fig. 3 ein xy-Diagramm zum Vergleich von y = gc x' mit der Parameterdarstellung x = $\varphi_{FS}$ (t), y = $\varphi_{BS}$ (t); und

Fig. 4 eine Darstellung der Gleichung 5 mit dem Parameter p = 3.

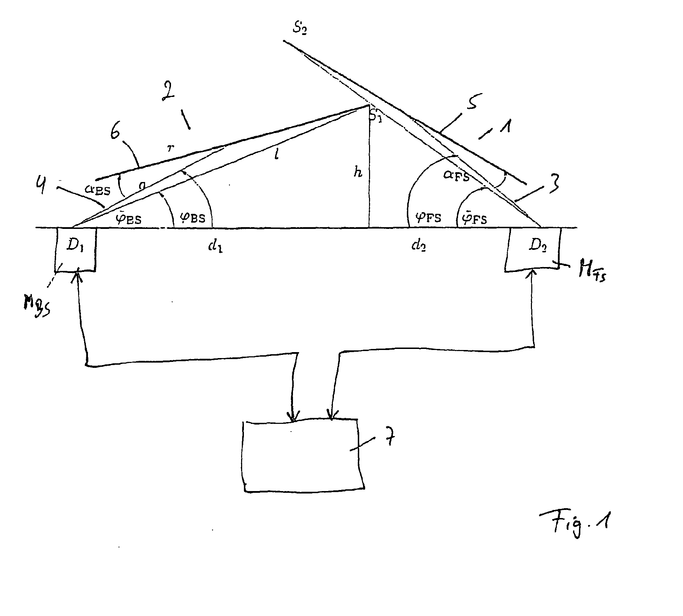

In Fig. 1 ist schematisch eine bevorzugte Ausführungsform einer Scheibencaischanlage mit zwei gegenläufigen Wischern dargestellt. Die Scheibenwischanlage weist einen fahrerseitigen Wischer 1 und beifahrerseitigen Wischer 2 auf. Der fahrerseitige Wischer 1 umfasst einen fahrerseitigen Wischarm 3 und ein fahrerseitiges Wischerblatt 5, das an einem Ende des fahrerseitigen Wischarms 3 angebracht ist. Der beifahrerseitige Wischer 2 umfasst einen beifahrerseitigen Wischarm 4 und ein beifahrerseitiges Wischerblatt 6.

Ein jeweils anderes Ende der Wischarme 3, 4 ist mit einem Antrieb $M_{FS}$, $M_{BS}$ verbunden. Der fahrerseitige Antrieb $M_{FS}$ treibt den fahrerseitigen Wischer 1 und der beifahrerseitige Antrieb $M_{BS}$ den beifahrerseitgen Wischer 2 an. Der fahrerseitige Antrieb $M_{FS}$ und der beifahrerseitige Antrieb $M_{BS}$ sind jeweils mit einer Regelungseinheit 7 verbunden, die die Antriebe $M_{FS}$, $M_{BS}$ gemäß einer vorgegebenen Winkellage bewegt. Die Steuerung der Antriebe $M_{FS}$, $M_{BS}$ wird vorzugsweise mit Hilfe einer Pulsweitenmodulation durchgeführt, wobei als Stellgrößen Zweigströme an die Antriebe $M_{FS}$, $M_{BS}$ ausgegeben werden. Zur Durchführung der Regelung in der Regelungseinheit 7 empfängt die Regelungseinheit 7 von den Antrieben $M_{FS}$, $M_{BS}$ jeweils Lage und/oder Bewegungs- bwz. Geschwindigkeitsdaten, um daraus die nächsten Stellgrößen zu ermitteln.

Die Regelungseinheit 7 ist so gestaltet, dass der einzustellende Winkel für den fahrerseitigen Wischer 5 und den beifahrerseitigen Wischer 6 gemäß einer trigonometrischen Funktion eingestellt werden. D.h. der Winkelverlauf wird, nicht wie bisher üblich, aus kubischen Kurvenabschnitten, die zwischen empirisch bestimmten Wischerpositionen eingesetzt werden, ermittelt, sondern durch Zugrundelegen einer trigonometrischen Funktion mit Formparametern, die so ausgewählt werden, dass ein Rattern der Wischer und ein Kollidieren der Wischer vermieden werden kann.

Zur Beschreibung der Wischeranordnung werden folgende Bezeichnungen verwendet: die Parameter bezüglich der Beifahrerseite werden mit dem Index BS, die Parameter bezüglich der Fahrerseite mit dem Index FS versehen. Der Abstand zwischen den Drehpunkten D1,D2 der beiden Wischerarme 3,4 wird mit d bezeichnet, a ist die Länge eines Wischarms und r die halbe Länge der Wischblätter 5,6. 1 bezeichnet die Länge einer gedachten Verbindung zwischen einem der Drehpunkte D1,D2 und der Spitze des entsprechenden Wischerblattes 5,6. Die Winkel zwischen d und 1 werden mit $\overline{\varphi}_{FS}$ bzw. $\overline{\varphi}_{BS}$ bezeichnet. $\overline{\varphi}_{FS}$ bzw. $\overline{\varphi}_{BS}$ sind die Winkel zwischen d und a. Alle Winkel sind positiv in Richtung der aufwärts wischenden Wischer definiert.

Der zeitliche Verlauf der Wischarmwinkel muß so festgelegt werden, dass keine Kollision der Wischer möglich ist. Damit beide Wischerantriebe $M_{FS}$, $M_{BS}$ über einen Wischzyklus näherungsweise die gleiche Arbeit verrichten, sollen die Wischverläufe die gleiche Form haben, sie werden lediglich in der Abszisse gespiegelt und verschoben. In Formel ausgedrückt bedeutet dies:

$$\varphi_{FS} = F(t)$$

$$\varphi_{BS} = -F(t - \tau) + \kappa,$$

wobei F eine über der Zeit t periodische Funktion ist. Die Phasenverschiebung $\tau$ und der Verschiebefaktor $\kappa$ werden so gewählt, dass $\overline{\varphi}_{FS}$ und $\overline{\varphi}_{BS}$ zum selben Zeitpunkt die untere bzw. die obere Umkehrlage durchlaufen.

Da bei der Wahl der trigonometrischen Funktion eine reine Sinusfunktion nicht verwendet werden kann, da sie in der unterer. Umkehrlage eine Kollision erzeugt ist eine sinusförmige Funktion, die in der einen Umkehrlage breiter und in der anderen schmaler ist als die reine Sinusfunktion, notwendig.

Diese Verformung ist so zu wählen, dass es zu keinen Kollisionen der Wischer während der Wischbewegung kommt.

Andererseits darf die Krümmung der Solltrajektorie in den Umkehrlagen aber nicht zu gering sein, da bei zu kleinen Geschwindigkeiten in den Umkehrlagen das Wischgummi kurzzeitig an der Scheiben haften kann und es somit zum Rattern des Wischers auf der Scheibe kommt.

Die gewünschte trigonometrische Funktion wird aus Sinus- und Cosinusanteilen gebildet. Es wurde festgestellt, dass die trigonometrische Funktion am besten aus einer Summe aus Sinus- und Consinusanteilen gebildet wird. Zu einer Sinusfunktion wird eine Cosinusfunktion mit der doppelten Frequenz und einem Offset von 1 addiert. Die Cosinusfunktion wird über den Faktor k gewichtet. Über den Parameter k kann die Verformung (Verbeulung) der Funktion variiert werden. Um die Solltrajektorie in den Umkehrlagen nicht zu flach werden zu lassen, wird ein weiterer Sinusanteil mit der dreifachen Frequenz addiert. Dieser Anteil wird über den Faktor q gewichtet. Die Wischbereiche sind definiert mit $\overline{\varphi}_{FS} \in [0, \overline{\varphi}_{max}]$ und $\overline{\varphi}_{BS} \in [0, \varphi_{max}]$. Die zeitlichen Läufe $\overline{\varphi}_{BS}(t)$ und $\overline{\varphi}_{FS}(t)$ werden definiert als

$$\overline{\varphi}_{BS}(t) = -\frac{\varphi_{max}}{2}\left(\sin(\omega t + \gamma) + \frac{1}{k}\cos(2(\omega t + \gamma) + 1) - \frac{1}{q}\sin 3(\omega t + \gamma) - 1\right)\frac{q}{1+q}$$

$$(1a)$$

$$\overline{\varphi}_{FS}(t) = -\frac{\varphi_{max}}{2}\left(\sin(\omega t - \gamma) + \frac{1}{k}\cos(2(\omega t - \gamma) + 1) - \frac{1}{q}\sin 3(\omega t - \gamma) + 1\right)\frac{q}{1+q}$$

$$(1b)$$

wobei $\omega = \dfrac{2\pi}{T}$ die Winkelgeschwindigkeit, T die Periodendauer und $\gamma = \dfrac{\pi}{2}$ den Phasenwinkel der Wischbewegung bezeichnen. Die Parameter k und q werden so gewählt, dass Kollisionen der beiden Wischer vermieden werden.

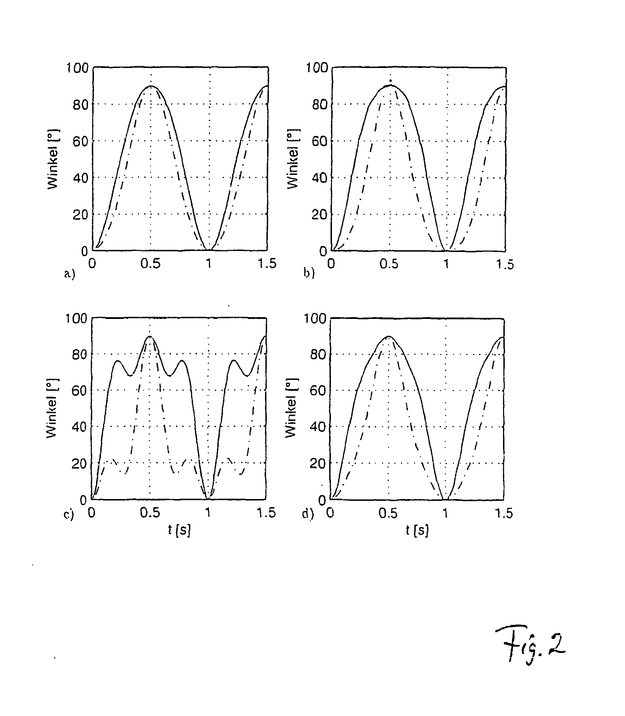

In den Abbildungen 2a bis 2d ist dargestellt, wie die Einflüsse von k und q sich bezüglich der Wischverläufe auswirken. In Fig. 2a sind die Zeitverläufe für $\overline{\varphi}_{FS}$ (durchgezogene Linie) und $\overline{\varphi}_{BS}$ (gestrichelte Linie) mit k = 10 und q = 100 dargestellt. Die y-Achse gibt den Winkel und die x-Achse die Zeit in Sekunden an. Nach 0,5 Sekunden wird von den beiden Wischarmen die obere Umkehrlage erreicht. Die Steigung nahe der Umkehrlagen gemäß der in Fig. 2a angegebenen Kurven gibt die Geschwindigkeit nahe des Umkehrpunktes an. Ist die Steigung dort zu gering, d.h. die Wischer bewegen sich langsam, kann es zu einem Haften der Wischer und somit zu einem Rattern kommen. Nach einer Sekunde wird von beiden Wischern eine untere Umkehrlage erreicht. Auch hier muß die Geschwindigkeit der Wischarme nahe der Umkehrlagen einen Minimalwert überschreiten, darüber hinaus müssen die beiden Kurven nahe der unteren Umkehrlage einen ausreichenden Abstand aufweisen, so dass es nicht zu einer Kollision der Wischarme kommt.

In Fig. 2b ist ein Zeitverlauf für $\overline{\varphi}_{FS}$ und $\overline{\varphi}_{BS}$ dargestellt, mit den Parametern k = 5 und q = 100. Man erkennt, dass in der oberen Umkehrlage der Wischverlauf des fahrerseitigen Wischers sehr flach wird, so dass die Geschwindigkeit dort sehr gering ist und es zu einem Haften, d.h. einem Rattern des Wischers kommen kann. Ebenso ist der Wischverlauf des beifahrerseitigen Wischers 2 nahe der unteren Umkehrlage sehr flach, so dass es dort zu einem Rattern kommen kann.

In Fig. 2c sind die Winkelverläufe mit den Parametern k = 2 und q = 2 dargestellt. Man erkennt, dass die Geschwindigkeiten in den Umkehrlagen ausreichend groß sind, es jedoch zu einer kurzzeitigen Richtungsumkehr zwischen der oberen und unteren Umkehrlage kommt. Dies ist nicht sinnvoll, da der Weg des Wischers kontinuierlich von der oberen Umkehrlage zur unteren Umkehrlage und umgekehrt erfolgen soll, da ansonsten eine Störung des Sichtbereiches durch einen sich hin- und herbewegenden Wischer erfolgt.

In Fig. 2d ist der Winkelverlauf der Wischer für die Parameter k = 5 und q = 15 dargestellt. Man erkennt einen kontinuierlichen Wischerverlauf zwischen der oberen und unteren Umkehrlage, eine ausreichende Steigung in der Nähe der oberen und unteren Umkehrlage sowie ein ausreichender Abstand der Winkelverläufe für den fahrerseitigen und beifahrerseitigen Wischer 1,2.

Der in Fig. 2d dargestellte Verlauf der Wischer stellt einen geeigneten Verlauf dar. Im folgenden wird dargestellt, wie die geeigneten Parameter k und q gefunden werden können.

Nach dem die Zeitverläufe von $\overline{\varphi}_{FS}$ und $\overline{\varphi}_{BS}$ bis auf die Gewichtungsparameter bestimmt sind, soll im folgenden Kriterium für die Bestimmung der Parameter k und q festgelegt werden.

Vereinfacht kann die Geometrie der Scheibenwischanlage am Dreieck mit den Eckpunkten D1,D2,S1 wie in der Fig. 1 dargestellt, studiert werden. Der Winkel $\overline{\varphi}_{FS}$ ergibt sich dadurch, dass $S_1$ entlang der Verbindungslinie D2,S2' zwischen dem beifahrerseitigen Drehpunkt und der äußeren Spitze des beifahrerseitigen Wischblattes (Punkt s2) läuft. Der Abstand zwischen beiden Drehpunkten wird mit d bezeichnet, die Höhe des gedachten Dreiecks 2h. In diesem Fall gilt:

$$\tan \overline{\varphi}_{FS} = \frac{h}{d_2}$$

$$h = l \sin \overline{\varphi}_{BS}$$

$$d_2 = d - l \cos \overline{\varphi}_{BS}$$

$$\overline{\varphi}_{FS} = \arctan\left(\frac{l \sin \overline{\varphi}_{BS}}{d - l \cos \overline{\varphi}_{BS}}\right) = g(\overline{\varphi}_{BS}).$$

$$(2)$$

Bei der Wahl von

$$\overline{\varphi}_{FS}(t) \geq g(\overline{\varphi}_{BS}(t)) \qquad\qquad (3)$$

treten keine Kollisionen der Wischer auf.

Die Aufgabe ist es nun, q und k so zu wählen, dass die Bedingung (3) erfüllt ist. Als hinreichende Bedingung muß gelten, dass die Steigung $\dfrac{d\overline{\varphi}_{FS}(t)}{d\overline{\varphi}_{BS}(t)}$ im Nullpunkt größer oder gleich g' ($\overline{\varphi}_{FS}$) im Nullpunkt ist. Dies wird in Fig. 3 veranschaulicht.

In Fig. 3 ist eine Parameterdarstellung x = $\overline{\varphi}_{FS}$(t), y = $\overline{\varphi}_{BS}$ (t) mit den Parametern k = 5, q = 15 und l/d = 3/4. In Fig. 3 sind die Parameter k und q so gewählt, dass beide Kurven mit der gleichen Steigung den Nullpunkt verlassen. Wenn es keine zusätzlichen Wendepunkte gibt, dann liegt der Graph der Parameterdarstellung der Wischerverläufe über den Graph von d. Die Ableitungen der Gleichung (2) bei x = 0 ist

$$g'(0) = \frac{l\cos(0)(d - l\cos(0)) + l^2\sin(0)^2}{(d - l\cos(0))^2} = \frac{l}{d - l}$$

Nun wird gefordert

$$\left.\frac{d\overline{\varphi}_{FS}(t)}{d\overline{\varphi}_{BS}(t)}\right|_{t=0} \geq g'$$

mit

$$\frac{d\overline{\varphi}_{FS}(t)}{d\overline{\varphi}_{BS}(t)} = \frac{d\overline{\varphi}_{FS}(t)}{dt}\frac{dt}{d\overline{\varphi}_{BS}(t)} = \frac{d}{dt}\overline{\varphi}_{FS}(t)(\frac{d}{dt}\overline{\varphi}_{BS}(t))^{-1}.$$

Nach der Regel von L'Hopital kann die Steigung im Ursprung gefunden werden:

$$\left.\frac{d\overline{\varphi}_{FS}(t)}{d\overline{\varphi}_{BS}(t)}\right|_{t=0} = \frac{kq + 4q + 9k}{kq - 4q + 9k} \geq \frac{l}{d - l} = \rho \geq 1. \qquad (4)$$

Es gilt $\rho \geq 1$ , da $\rho \geq d/2$ ist. Diese Gleichung kann nun nach q oder k umgestellt werden:

$$q \geq \frac{9k(1 - \rho)}{(\rho k - k - 4 - 4\rho)} \qquad (5)$$

$$k \leq \frac{4q(1 + \rho)}{(-q - 9 + \rho q + 9\rho)} \qquad (6)$$

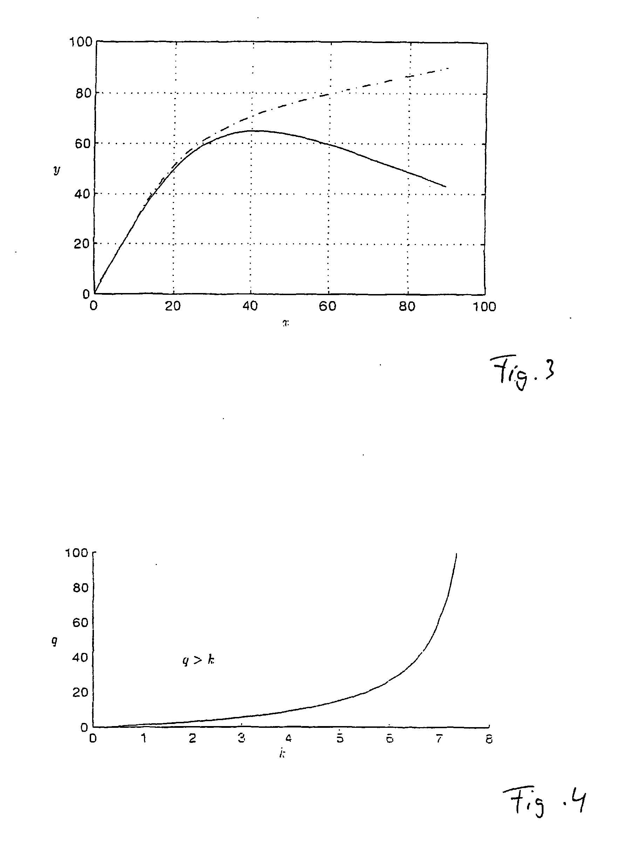

Im folgenden wird am fahrerseitigen Wischverlauf diskutiert, wie k und q ausgewählt werden. In der Fig. 4 ist der erlaubte Bereich für k und q gemäß Gleichung (5) dargestellt. Man kann sich überlegen, dass bei einem vorgegebenen q das zugehörige k nahe dem Graph von Gleichung (5) liegen sollte. Je größer k gewählt wird, desto langsamer wird der jeweilige Antrieb den Wischer beschleunigen, da die Verformung der Sinuskurve verringert wird. Andererseits ergibt sich bei $k = 4\frac{\rho + 1}{\rho - 1}$ eine Singularität gemäß Gleichung (5). K ist nach oben durch $k \leq 4\frac{\rho + 1}{\rho - 1}$ begrenzt.

Ausgehend von diesen Überlegungen soll nun q auf den in Fig. 4 dargestellten Graph von

$$q = \frac{9k(1-\rho)}{(\rho k - k - 4 - 4\rho)} \qquad\qquad (7)$$

liegen.

Nun muß noch der unbekannte Parameter k bestimmt werden. Wird der Parameter k nahe an seiner oberen Grenze gewählt, so verliert q an Einfluß, d.h. es wird keine zusätzliche Krümmung in den Umkehrlagen erzeugt. Dies entspräche einem Kurvenverlauf wie er in Fig. 2b dargestellt ist.

Andererseits darf q nicht zu klein gewählt werden, da dies eine starke Verformung an der Stelle t=T/4 verursacht. Dies entspräche dem Kurvenverlauf wie in Fig. 2c dargestellt.

Die Systemgrößen des Wischerantriebs lassen sich durch eine endliche Anzahl von Zeitableitungen berechnen. Die Systemgrößen können sein: Strom, Spannung, Motorwinkel, Motordrehzahl, Wischerdrehzahl und andere. Da die Gleichungen (1a) und (1b) beliebig oft nach der Zeit differenzierbar sind, lassen sich aus diesen direkt die Spannung am Antriebsmotor u und der Strom im Ankerkreis I in Abhängigkeit von k und der Zeit t berechnen.

Nun eine Kostenfunktion K formuliert werden, die anschließend minimiert werden kann. Als Kostenfunktion kann z.B. die während eines Zyklus verbrauchte elektrische Energie gewählt werden.

$$K = \int_{0}^{T} U(t,k)I(t,k)dt$$

Der Parameter k nach folgendem Schema gefunden werden:

- Berechne q (k) gemäß der Gleichung (7);
- Berechne U und I über das inverse System;
- Bilde Kostenfunktion K für k;
- Variiere k, bis K minimal wird.

Um das Minimum von K(k) zu finden, können einfache numerische Verfahren, wie z.B. ein Simplexverfahren, eingesetzt werden.

Bei der Herleitung der Bedingung zur Kollisionsvermeidung gemäß Gleichung (5) wurde die geometrische Anordnung der Wischer vereinfacht in einem Dreieck angenommen. Tatsächlich ist der kleinste Abstand zwischen den Wischern größer, da die in der unteren Umkehrlage nicht direkt aufeinander liegen. Um trotzdem sinnvoll mit der Gleichung (5) rechnen zu können, kann die Länge des unteren Wischers verkürzt angegeben werden. Man setzt hierzu l=l+s in der Gleichung (4) ein, wobei f negativ gewählt wird. Bei der Wahl eines positiven s kann der Sicherheitsabstand zwischen den beiden Wischern vergrößert werden.

Durch die Wahl einer trigonometrischen Funktion zur Bestimmung der Wischverläufe der Wischer können mehrere Vorteile erreicht werden. Zum einen lassen sich die Systemgrößen des Wischerantriebs, wie Strom, Spannung, Motorwinkel, Motordrehzahl und Wischerdrehzahl relativ einfach durch eine endliche Anzahl von Zeitableitungen berechnen. Dies ist bei trigonometrischen Funktionen besonders einfach möglich. Zum anderen lassen sich Bedingungen definieren, wie z.B. die Kollisionsvermeidungsbedingung, d.h. eine Minimalgeschwindigkeit in der Nähe der Umkehrlagen, die sich vergleichsweise einfach durch Parameter in die vorgegebene trigonometrische Funktion implementieren lässt.

**Patentansprüche**

**1.** Scheibenwischanlage mit zwei gegenläufigen Wischern (1,2), die über jeweils einen separaten Motor ($M_{FS}, M_{BS}$) antreibbar sind, wobei eine Regelungseinheit (7) vorgesehen ist, um die Motoren ($M_{FS}, M_{BS}$) über Steuersignale getrennt voneinander anzusteuern, wobei durch die Regelungseinheit (7) die Motoren ($M_{FS}, M_{BS}$) der Wischer (1,2) angesteuert werden, um eine von der Zeit abhängige Winkelstellung der Wischer gemäß einer trigonometrischen Funktion $\varphi(t)$ vorzugeben, **dadurch gekennzeichnet, daß** die trigonometrische Funktion für den Wischer (1,2) einer Beifahrerseite

$$\overline{\varphi}_{BS}(t) = -\frac{\varphi_{max}}{2}\left(\sin(\omega t + \gamma) + \frac{1}{k}\cos(2(\omega t + \gamma) + 1) - \frac{1}{q}\sin 3(\omega t + \gamma) - 1\right)\frac{q}{1+q}$$

entspricht,
und die trigonometrische Funktion für den Wischer einer Fahrerseite

$$\overline{\varphi}_{FS}(t) = -\frac{\varphi_{max}}{2}\left(\sin(\omega t - \gamma) + \frac{1}{k}\cos(2(\omega t - \gamma) + 1) - \frac{1}{q}\sin 3(\omega t - \gamma) + 1\right)\frac{q}{1+q}$$

entspricht,
wobei $\varphi_{BS}$ dem Momentanwinkel auf der Beifahrerseite und $\varphi_{FS}$ der Momentanwinkel auf der Fahrerseite entspricht, wobei $\varphi_{max}$ den Wischbereich angibt, wobei $\omega$ die Winkelgeschwindigkeit, die von einer Periodendauer abhängt, entspricht, und $\gamma$ dem Phasenwinkel der Wischbewegung entspricht, wobei k und q Parameter sind, die so ausgewählt sind, dass Kollisionen der beiden Wischer vermieden werden.

2. Scheibenwischanlage nach Anspruch 1, wobei k und q so ausgewählt sind, dass mindestens in einer Umkehrlage eines der Wischer (1,2) die Wischgeschwindigkeit einen Minimalwert übersteigt, so dass ein Rattern der Wischer (1,2) auf der Scheibe vermieden wird.

3. Scheibenwischanlage nach Anspruch 1 oder 2, wobei k und q so ausgewählt sind, dass sich die Winkelverläufe der Wischer ohne Richtungsänderung der Wischerbewegung von einer oberen Umkehrlage zu einer unteren Umkehrlage bewegen.

## Claims

1. Windscreen wiper system comprising two opposed wipers (1, 2) which can be driven via a separate motor ($M_{FS}$, $M_{BS}$), a regulating unit (7) being provided in order to activate the motors ($M_{FS}$, $M_{BS}$) separately from each other via control signals, the motors ($M_{FS}$, $M_{BS}$) of the wipers (1, 2) being activated by the regulating unit (7) in order to predetermine a time-dependent angular position of the wipers in accordance with a trigonometric function $\varphi(t)$, **characterized in that** the trigonometric function for the wiper (1, 2) of a passenger's side corresponds to

$$\overline{\varphi}_{BS}(t) = -\frac{\varphi_{max}}{2}\left(\sin(\omega t + \gamma) + \frac{1}{k}\cos(2(\omega t + \gamma) + 1) - \frac{1}{q}\sin 3(\omega t + \gamma) - 1\right)\frac{q}{1+q}$$

and the trigonometric function for the wiper of a driver's side corresponds to

$$\overline{\varphi}_{FS}(t) = -\frac{\varphi_{max}}{2}\left(\sin(\omega t - \gamma) + \frac{1}{k}\cos(2(\omega t - \gamma) + 1) - \frac{1}{q}\sin 3(\omega t - \gamma) + 1\right)\frac{q}{1+q}$$

$\varphi_{BS}$ corresponding to the instantaneous angle on the passenger's side and $\varphi_{FS}$ corresponding to the instantaneous angle on the driver's side,
$\varphi_{max}$ indicating the wiped area, $\omega$ corresponding to the angular velocity which depends on a period, and $\gamma$ corresponding to the phase angle of the wiping movement,
k and q being parameters which are selected in such a manner that collisions of the two wipers are avoided.

**2.** Windscreen wiper system according to Claim 1, k and q being selected in such a manner that, at least in a reversal position of one of the wipers (1, 2), the wiping speed exceeds a minimum value, so that a rattling of the wipers (1, 2) on the window is avoided.

**3.** Windscreen wiper system according to Claim 1 or 2, k and q being selected in such a manner that the angle profiles of the wipers move from an upper reversal position to a lower reversal position without a change in direction of the wiper movement.

**Revendications**

**1.** Installation d'essuie-glace comportant deux essuie-glace (1, 2) fonctionnant en sens opposé, ces essuie-glace étant entraînés chacun par un moteur distinct ($M_{FS}$, $M_{BS}$), une unité de régulation (7) commandant séparément les moteurs ($M_{FS}$, $M_{BS}$) par des signaux de commande, l'unité de régulation (7) commandant les moteurs ($M_{FS}$, $M_{BS}$) des essuie-glace (1, 2) pour qu'une position angulaire des essuie-glace en fonction du temps soit prédéfinie selon une fonction trigonométrique $\varphi(t)$,
**caractérisée en ce que**
la fonction trigonométrique des essuie-glace (1, 2) pour le côté passager correspond à la fonction suivante :

$$\overline{\varphi}_{BS}(t) = -\frac{\varphi_{\max}}{2}\left(\sin(\omega t + \gamma) + \frac{1}{k}\cos(2(\omega t + \gamma) + 1) - \frac{1}{q}\sin 3(\omega t + \gamma) - 1\right)\frac{q}{1+q}$$

et la fonction trigonométrique de l'essuie-glace côté conducteur est donnée par la formule suivante :

$$\overline{\varphi}_{FS}(t) = -\frac{\varphi_{\max}}{2}\left(\sin(\omega t - \gamma) + \frac{1}{k}\cos(2(\omega t - \gamma) + 1) - \frac{1}{q}\sin 3(\omega t - \gamma) + 1\right)\frac{q}{1+q}$$

dans ces formules $\varphi_{BS}$ représente l'angle instantané du côté du passager et $\varphi_{FS}$ représente l'angle instantané du côté conducteur,
$\varphi_{max}$ représentant la plage d'essuyage,
$\omega$ représentant la vitesse angulaire dépendant de la durée de la période et
$\gamma$ représente l'angle de phase du mouvement d'essuyage,
k et q étant des paramètres choisis pour éviter toute collision entre les deux essuie-glace.

**2.** Installation d'essuie-glace selon la revendication 1 dans laquelle k et q sont choisis pour que dans au moins une position d'inversion de l'un des essuie-glace (1, 2), la vitesse d'essuyage dépasse une valeur minimale pour éviter le bruit de raclage avec secousse des essuie-glace (1, 2) sur la vitre.

**3.** Installation d'essuie-glace selon les revendications 1 ou 2,
**caractérisée en ce que**
k et q sont choisis pour que les courbes angulaires des essuie-glace se déplacent sans variation de direction du mouvement d'essuie-glace d'une position d'inversion haute vers une position d'inversion basse.

Fig. 1

Fig. 2

Fig. 3

Fig. 4